# EUROPÄISCHE PATENTANMELDUNG

(11) **EP 3 058 815 A1**
(43) Veröffentlichungstag der Anmeldung: **24.08.2016**
(21) Anmeldenummer: 15000468.7
(22) Anmeldetag: 17.02.2015
(51) Int. Cl.: A01K 5/00

(54) **Förderband mit Förderwalze**

(71) Anmelder: B. Strautmann & Söhne GmbH u. Co. KG, 49196 Bad Laer (DE)
(72) Erfinder: Marquering, Johannes, 49176 Hilter (DE); Schacht, Sebastian, 33790 Halle (DE)
(74) Vertreter: Träger, Denis

(57) **Zusammenfassung**

Die Erfindung betrifft ein Förderband (1; 1') zum Verteilen von Viehfutter, Stroh oder ähnlichem Material nach dem Oberbegriff des Anspruchs 1 sowie einen mit einem solchen Förderband ausgestatteten Futtermischwagen.

Das Förderband umfasst einen Tragrahmen (2), der mit einer Bodenplatte (7) ausgestattet ist. Im Tragrahmen (2) sind Achswellen (8; 8') gelagert, wobei auf jeder Achswelle (8; 8') wenigstens zwei Umlenkräder (10; 10') gelagert sind und wobei durch den Bereich zwischen den Umlenkrädern (10; 10') wenigstens eine Abwurfstelle (17) für das zu verteilende Viehfutter, Stroh oder ähnlichem Material definiert wird. Die Umlenkräder werden von einen endlosen Kratzboden (18) umlaufen. Der endlose Kratzboden wird ausgebildet durch Zugstränge (13) und diese verbindende Förderleisten (14). Der Kratzboden (18) ist verbundenen mit einem ersten Antrieb (19) und transportiert aufgebrachtes Fördergut zur Abwurfstelle (17).

Bei mit Kratzböden ausgestatteten Förderbändern wird das auf die Förderleisten und die Bodenplatte abgelegte Fördergut von den Förderleisten mehr oder weniger haufenweise zur Abwurfstelle geschoben. Die Verteilung ist daher ungleichmäßig.

Um eine gleichförmige Futterabgabe zu begünstigen und das die Abwurfstelle schubweise erreichende Futter aufzulockern wird vorgeschlagen, das Förderband (1; 1') an mindestens einer Abwurfstelle (17) mit einer auf der Achswelle (8; 8') zwischen den Umlenkrädern (10;10') angebrachten Förderwalze (12; 12') auszustatten.

## Beschreibung

Die Erfindung betrifft ein Förderband zum Verteilen von Viehfutter, Stroh und ähnlichem Material nach dem Oberbegriff des Anspruchs 1 sowie einen mit einem solchen Förderband ausgestatteten Futtermischwagen.

Förderbänder werden unter anderem an Maschinen zur Verteilung lockerer Güter verwendet. Ein verbreitetes Einsatzgebiet ist die Viehfütterung mittels Futtermischwagen. Hierbei wird aus dem Mischraum des Futtermischwagens Viehfutter auf das Förderband abgegeben und von diesem in einem Futtergang abgelegt. Die Förderbänder können vor oder hinter dem Mischraum des Futtermischwagens angeordnet und so breit sein, dass sie zwei Abwurfstellen umfassen, so dass eine Futterabgabe an beiden Seiten des Futtermischwagens hin möglich ist. Die Austragrichtung wird im Allgemeinen durch Umschaltung der Fördereinrichtung eingestellt.

Alternativ dazu können an Futtermischwagen auch kurze Förderbänder vorgesehen sein, die die Futterabgabe nur zu einer Seite hin ermöglichen. Solche Förderbänder verfügen über lediglich eine Abwurfstelle.

Zu unterscheiden ist weiterhin zwischen Förderbändern, die mit einem so genannten Kratzboden ausgestattet sind und Förderbändern mit einem durchgängigen Transportband. Als Kratzboden wird eine Fördereinrichtung dann bezeichnet, wenn zwischen wenigstens zwei Antriebssträngen Förderleisten angebracht sind und die Förderleisten einen darunter liegenden festen Boden überstreichen. Hierbei wird das zu transportierende Material von den Förderleisten über den Boden geschoben.

Bekannte Förderbänder mit Kratzboden umfassen einen Tragrahmen, der mit einer starr angebrachten Bodenplatte ausgestattet ist. Im Tragrahmen sind weiterhin zwei mit Umlenkrädern für den Kratzboden versehene Achswellen gelagert. Der Kratzboden wird ausgebildet durch wenigstens zwei die Umlenkräder umlaufende und voneinander beabstandete Zugstränge sowie diese verbindenden Förderleisten. Durch den Bereich zwischen den Umlenkrädern wird wenigstens an einer Seite des Förderbandes eine Abwurfstelle für das zu verteilende Viehfutter, Stroh oder ähnliche Material definiert. Der Kratzboden ist mit einem Antrieb verbunden, bei dem es sich in der Regel einem Hydraulikmotor handelt. Die Förderleisten liegen gleitend auf der Bodenplatte auf, so dass auf das Förderband aufgebrachtes Fördergut zur Abwurfstelle transportierbar ist.

Bei mit Kratzböden ausgestatteten Förderbändern wird das auf die Förderleisten und die Bodenplatte abgelegte Fördergut von den Förderleisten mehr oder weniger haufenweise zur Abwurfstelle geschoben. Dabei gleiten die Förderleisten über die am Tragrahmen starr angebrachte Bodenplatte. Die Enden der Bodenplatte sind im Allgemeinen kreisbogenförmig ausgebildet sind, um die Antriebswellen, bzw. Umlenkwellen abzudecken. Durch den schiebenden Transport häuft sich das Fördergut vor den Förderleisten an und wird schubweise abgeworfen. Die Verteilung ist daher ungleichmäßig. Weiterhin ist die Laufgeschwindigkeit des Kratzbodens systembeding nur in begrenztem Umfang variabel, so dass sich nur eine relativ begrenzte Wurfweite für das auszubringende Gut erreichen lässt.

Neben den genannten Förderbändern ist aus DE 202010005829 U1 ein Förderband bekannt, welches an Stelle eines umlaufenden und über einen Boden hinweggleitenden Kratzboden mit einem geschlossenen Transportband ausgestattet ist. Bei dem Transportband handelt es sich um ein Endlosband mit aufgebrachten Mitnehmerleisten. Das Förderband ist weiterhin an mindestens einer Seite mit einer zusätzlichen Wurfwalze ausgestattet, die bedarfsweise vor das Förderband geschwenkt werden kann, so dass an der Abgabestelle des Förderbandes eintreffendes Futter von der Förderwalze aufgenommen und beschleunigt werden kann. Hierdurch erhöht sich die Wurfweite bei der Ausbringung des Förderguts.

Die Ausrüstung eines Förderbandes mit schwenkbarer Wurfwalzenvorrichtung ist aufwendig, zudem vergrößert sich bei ausgeschwenkter Wurfwalze die Fahrzeugbreite, was in engen Stalldurchfahrten problematisch sein kann.

Aufgabe der Erfindung ist es, ein mit einem Kratzboden ausgestattetes Förderband vorzuschlagen, welches eine gleichförmige Futterabgabe begünstigt und das die Abwurfstelle schubweise erreichende Futter auflockert.

Die erfindungsgemäße Aufgabe wird gelöst durch ein Förderband nach dem Oberbegriff des Anspruches 1, bei dem an mindestens einer Abwurfstelle auf der Achswelle eine Förderwalze zwischen den Umlenkrädern angeordnet ist.

Das erfindungsgemäße Förderband weist somit keine starre Abwurfkante sondern vielmehr an Stelle einer starren Abwurfkante ein bewegliches Element, nämlich die bewegliche Förderwalze, auf. Von besonderem Vorteil ist, dass die Förderwalze das von den Förderleisten zugeführte Ausbringmaterial widerstandsarm übernimmt und anschließend gleichförmig ablegt. Die durch den schubweisen Transport des Fördergutes bedingten Verdichtungen und haufenartigen Strukturen werden hierbei zumindest teilweise aufgelöst indem das von den Förderleisten herangeführtes Material auseinandergezogen und weitgehend egalisiert wird.

Weitere Vorteile ergeben sich dadurch, dass die auf der Achswelle angeordnete Förderwalze im Gegensatz zu einer vor das Förderband geschwenkten Wurfwalze die Gesamtbreite des Förderbandes nicht vergrößert. Dies wirkt sich insbesondere dann positiv aus, wenn ein mit einem erfindungsgemäßen Förderband ausgestatteter Futtermischwagen in räumlich engen Verhältnissen, beispielsweise engen Stalldurchfahrten, eingesetzt wird.

In einer vorteilhaften Ausführung weist die Förderwalze eine Breite (L) auf, die dem Abstand (c) zwischen den Zugsträngen entspricht. Die Förderwalze hat somit eine sich über die komplette Förderbandbreite erstreckende Wirkbreite.

Ebenso ist es günstig, wenn die Förderwalze einen äußeren Durchmesser aufweist, der doppelt so groß ist, wie der innere Umlenkradius der umlaufenden Förderleisten bzw. die äußeren Umlenkradien der Zugstränge. Die Förderwalze setzt somit eine von den Umlenkradien vorgegebene Kontur fort und bildet weitgehend nahtlose Übergangsbereiche zu dem die Förderwalze umlaufenden Kratzboden aus.

Die am Rahmen angebrauchte Bodenplatte weist vorzugsweise eine Breite auf, die dem Abstandsmaß zwischen den Zugsträngen plus eines beidseitig zwischen Zugstrang und Bodenplatte bzw. Förderwalze vorgesehen Abstandes entspricht. Der an dieser Stelle vorgesehene Abstand ist vorzugsweise kleiner als 5 mm, so dass einerseits die Reibung zwischen beweglichem Zugstrang und starrer Bodenplatte reduziert ist und sich andererseits in dem durch den Abstand definierten Spalt zwischen Bodenplatte und Zugstrang nur wenig Fördergut ablagern kann.

In einer anderen Ausführungsform kann auch vorgesehen sein, dass die Bodenplatte nicht bis an die beweglichen Zugstränge heranreicht, sondern diese in einem Randbereich überdeckt. In diesem Fall befindet sich zwischen Bodenplatte und Zugstrang kein senkrechter Spalt sondern ein waagerechter Spalt. Auch dieser waagerechte Spalt sollte möglichst klein sein. Er kann sogar vollständig entfallen, so dass der sich bewegende Zugstrang unmittelbar an der fest angebrachten Bodenplatte entlanggeführt wird.

Unabhängig davon, ob die Bodenplatte lediglich an den Zugstrang heranreicht oder diesen in einem Teilbereich überdeckt, kann auf der dem Rahmen zugewandten Seite des Zugstranges ein weiteres Abdeckelement für den Grenzbereich zwischen Zugstrang und Rahmen vorgesehen sein. Bei diesem weiteren Abdeckelement kann es sich beispielsweise um einer am Rahmen unmittelbar oberhalb des Zugstrangs angebrachte Kunststoffleiste handeln.

Zusätzlich oder alternativ zu den beschriebenen Maßnahmen kann ein Eindringen von Fördergut in die Spalten zwischen den Zugsträngen und der Bodenplatte und/oder der Förderwalze zudem verhindert werden, wenn am Rahmen angebrachte Abdeckungen vorgesehen sind, die die nicht nur den Randbereich der Zugstränge, sondern vielmehr die Zugstränge und deren Übergangsbereiche insgesamt übergreifen.

Soweit die Bodenplatte die Zugstränge nicht überlappt, ist es günstig, wenn die Oberseite der Zugstränge und die Oberseite der Bodenplatte auf einer Höhe liegen, bzw. eine Ebene bilden.

Bei Ausführungsformen, bei denen die Bodenplatte die Zugstränge überlappt, ist es günstig, wenn geeignete Maßnahmen getroffen werden, um die an den niedriger liegenden Zugsträngen befestigten Förderleisten auf das Niveau der höher liegenden Bodenplatte anzuheben. Die Förderleisten können beispielsweise verkröpft oder mit zwischen Förderleiste und Zugstrang angeordneten Unterlegelementen ausgestattet sein.

Weiterhin ist es günstig, wenn die Bodenplatte wenigstens eine Endseite aufweist, die über die Förderwalze ragt. Fördergut kann so nicht zwischen Bodenplatte und Förderwalze gelangen. Besonders günstig ist es dabei, wenn die Bodenplatte mit Ihrer Oberseite bis an die Förderwalze herangeführt wird, so dass die Oberseite der Bodenplatte sich dem äußeren Umfangszylinder der Förderwalze tangential annähert. Da die Außenkontur einer sich drehenden Förderwalze einen Kreisbogen beschreibt, kann die Bodenplatte im zur Förderwalze hin gerichteten Bereich konzentrisch hierzu bzw. spitz zulaufend ausgeführt sein. Hierdurch lässt sich ein zwischen fester Bodenplatte und sich drehender Förderwalze verbleibender Spalt soweit minimieren, dass ein berührungsloses Vorbeigleiten der rotierenden Förderwalze an der Bodenplatte gerade noch möglich ist.

Um zu verhindern, dass, beispielsweise bei einseitiger Belastung, die Antriebsstränge von den Umlenkrädern teilweise in axialer Richtung, und somit zu einer Außenseite des Förderbandes hin ablaufen, können Umlenkräder mit Bundscheiben an den Außenseiten vorgesehen sein. Erhöhter Verschleiß durch einseitige Belastung kann so vermieden werden.

In einer bevorzugten Ausführungsform ist die den ersten Antrieb umfassende Achswelle sowohl mit den Umlenkrädern als auch der Förderwalze fest verbunden, so dass mittels des vorgesehenen Antriebs sowohl der Kratzboden als auch die Förderwalze antreibbar ist. Im Arbeitseinsatz dreht sich die Förderwalze somit aktiv mit und zieht das durch die Förderleisten mehr oder weniger haufenweise zur Förderwalze herangeschobene Futter aktiv auseinander und egalisiert damit den Futteraustrag.

Dabei ist es besonders günstig, wenn die Umfangsgeschwindigkeit der Förderwalze und Umlaufgeschwindigkeit des Kratzbodens gleich sind.

In einer weiteren Ausführungsform ist für die Förderwalze ein zweiter Antrieb vorgesehen, so dass Kratzboden und Förderwalze unabhängig voneinander antreibbar sind. Hierzu ist es notwendig, den koaxialen Antrieb von Kratzboden und Förderwalze zu trennen.

Soweit die Antriebsgeschwindigkeiten so eingestellt werden, dass die Umfangsgeschwindigkeit der Förderwalze kleiner ist als die Umlaufgeschwindigkeit des Kratzbodens wird hierdurch ein das Fördergut abbremsender Effekt erzielt. Bei umgekehrt eingestellten Antriebsgeschwindigkeiten wird das Fördergut durch die Förderwalze beschleunigt, so dass zunächst der Effekt des Auseinanderziehens des Förderguts verstärkt und ggf. unterschiedlichen Futterstrukturen angepasst werden kann.

Darüber hinaus kann mit weiter erhöhter Wurfwalzen-Drehgeschwindigkeit die Wurfweite vergrößert werden. Hierdurch eröffnen sich für das erfindungsgemäße Förderband zusätzliche Anwendungsmöglichkeiten. So kann ein solches Förderband nicht nur für Fütterungsarbeiten bzw. zur schwadförmigen Ablage von Fördergut eingesetzt werden, sondern beispielsweise auch zum Einstreuen von Stroh in einen Stallbereich.

Der zweite Antrieb kann beispielsweise realisiert werden, indem die Umlenkräder auf der Achswelle frei drehbar angeordnet sind und ein zusätzliches Antriebselement zum Antrieb der Umlenkräder umfasst. Das zusätzliche Antriebselement kann unmittelbar am Umlenkrad angebracht sein oder auch, soweit das Umlenkrad eine Bundscheibe umfasst, an dieser Bundscheibe. Im Ergebnis sind Umlenkräder und Förderwalze bei dieser Ausführung zwar weiterhin auf derselben Achswelle gelagert, ihre Antriebe sind jedoch entkoppelt.

Weiterhin kann ein Vorgelege vorgesehen sein, mittels dessen die Umlenkräder über Zugmittelantriebe, z. B. Kettentriebe, antreibbar sind.

Sowohl für den ersten als auch für den zweiten Antrieb wird der Einsatz eines Hydraulikmotors bzw. ein hydraulischer Antrieb bevorzugt. Es ist jedoch nicht ausgeschlossen, dass einer oder beide Antriebe anders als hydraulisch, beispielsweise elektrisch ausgeführt sind.

Um eine optimale Geschwindigkeitseinstellung zu ermöglichen wird bevorzugt, dass die Umfangsgeschwindigkeit der Förderwalze und die Umlaufgeschwindigkeit des Kratzbodens stufenlos einstellbar sind. Unter bestimmten Bedingungen kann es sinnvoll sein eine Sicherheitsschaltung vorzusehen, die verhindert, dass die Geschwindigkeit des Förderbodens größer ist als die Walzengeschwindigkeit, so dass Bremseffekte und Stauungen am Übergang von Förderboden zu Förderwalze ausgeschlossen werden.

Der Antrieb von Förderwalze und Kratzboden erfolgt vorzugsweise über eine Parallelschaltung, kann aber auch anders erfolgen.

Die Förderwalze, bzw. deren Mantelbereich, kann als runder Zylinder ausgeführt sein. In einer bevorzugten Ausführungsform weist der Mantel der Förderwalze eine polygonartige Kontur auf. Hierdurch wird die Übernahme des von den Förderleisten zugeführten Futters sowie die Auflockerung des Ausbringmaterials begünstigt. Weiterhin trägt die polygonartige Kontur dann, wenn die Umfangsgeschwindigkeit der Förderwalze die Umlaufgeschwindigkeit des Kratzbodens übersteigt, dazu bei, den Schlupf zwischen Fördergut und Förderwalze zu reduzieren.

Aus den gleichen Gründen ist es von Vorteil, wenn die Förderwalze mit Förderelementen besetzt ist. Die Förderelemente können je nach Einsatzzweck unterschiedlich ausgeführt sein, beispielsweise als Förderleisten oder Mitnahmezinken.

Das erfindungsgemäße Förderband ist insbesondere zum Einsatz an einem zur Ausbringung von Viehfutter vorgesehenen Futtermischwagen geeignet.

Die Erfindung wird nachstehend an Beispielen beschrieben und in den Zeichnungen dargestellt.
- Fig. 1: zeigt eine perspektivische Ansicht des Förderbandes in einer ersten Ausführungsform;
- Fig. 2: zeigt eine Draufsicht des Förderbandes aus Fig. 1;
- Fig. 3: eine Schnittansicht A - A nach Fig. 2;
- Fig. 4: zeigt eine Schnittansicht B - B nach Fig. 2;
- Fig. 5: zeigt in einer Draufsicht eine zweite Ausführungsform, bei der für Förderwalze und Kratzboden entkoppelte Antiriebe vorgesehen sind;
- Fig. 6: zeigt ein Förderband mit einer anderen Ausführungsform der Zugstrang-Abdeckung;
- Fig. 7: zeigt ein Detail aus Fig. 6.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

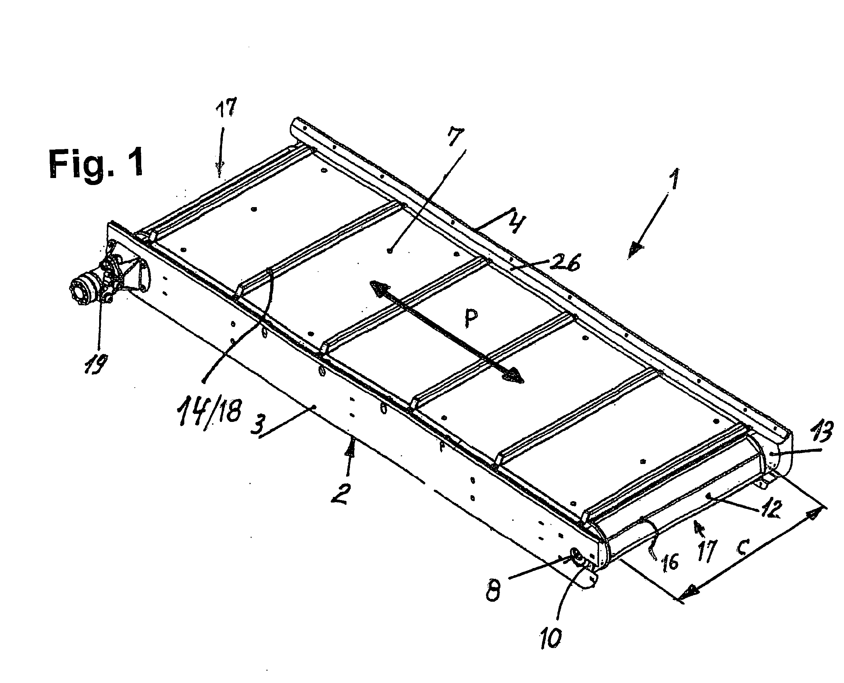

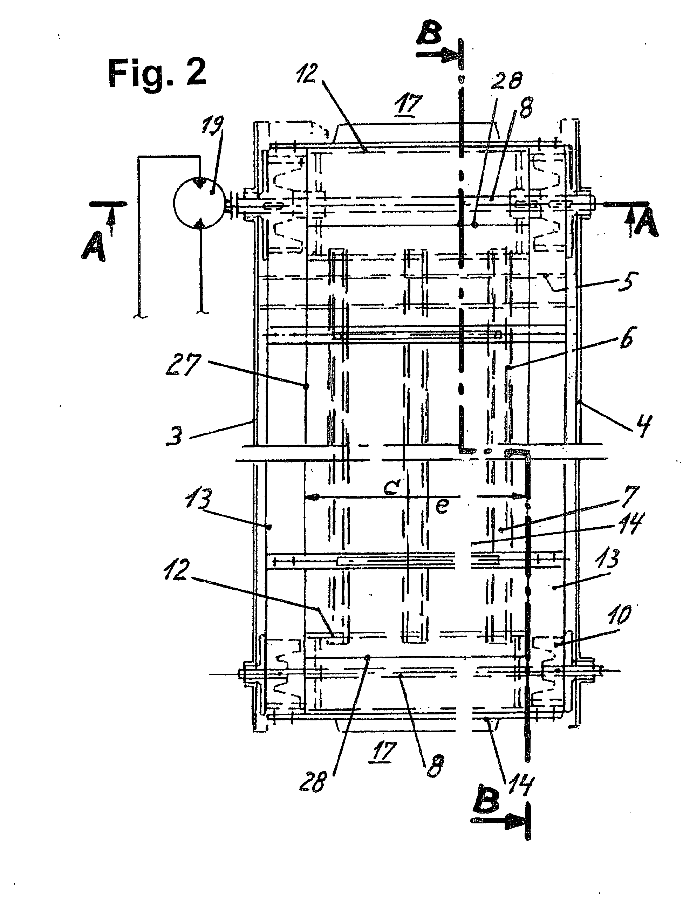

In den Fig. 1 bis 4 ist eine erste Ausführungsform eines erfindungsgemäßen Förderbandes 1 dargestellt. Das Förderband 1 umfasst im Wesentlichen:
- einen Tragrahmen 2 mit Seitenwänden 3, 4. Die Seitenwände 3, 4 sind miteinander über Querträger 5 verbunden. Die Querträger 5 tragen Auflageschienen 6, auf denen eine Bodenplatte 7 befestigt ist.
- in den Seitenwänden 3, 4 gelagerten Achswellen 8 mit darauf befestigten und mit Fingern 11 versehene Umlenkrädern 10 sowie einer zwischen den Umlenkrädern 10 angeordneten Förderwalze 12,
- einen Kratzboden 18, der gebildet ist aus Zugsträngen 13 sowie daran angebrachten Förderleisten 14. Der Kratzboden ist mittels eines ersten Antriebs 19, bei dem es sich im Ausführungsbeispiel um einen Hydraulikmotor handelt, antreibbar.

Die Förderwalze 12 ist ebenso wie die Umlenkräder 10 fest mit der Achswelle 8 verbunden. Die Förderwalze 12 weist einen Mantel 15 mit einer polygonartige Kontur auf und ist mit Förderelementen 16, bei denen es sich im Ausführungsbeispiel um Schlagleisten handelt, besetzt.

Das dem Förderband 1 im Allgemeinen kontinuierlich zugeführte Fördergut, z. B. Viehfutter aus dem Mischraum eines Futtermischwagens, wird zunächst auf der Bodenplatte 7 abgelegt und dort von den auf den Zugsträngen 13 befestigten Förderleisten 14 erfasst. Die Bodenplatte 7 weist eine Breite e auf, die etwas kleiner ist, als der Abstand c zwischen den Zugsträngen 13. Allerdings ist zwischen der Bodenplatte 7 und den Zugsträngen 13 jeweils ein ca. 3 mm breiter Spalt x vorgesehen, so dass ein direkter Kontakt zwischen den Zugsträngen 13 und der Bodenplatte 7 vermieden wird. Analog dazu weist auch die Förderwalze 12 eine Breite L auf, die etwas geringer ist als der Abstand c zwischen den Zugsträngen 13.

Zur Vermeidung von Materialablagerungen zwischen den Zugsträngen 13 und der Bodenplatte 7 bzw. der Förderwalze 12 sind am Rahmen 2 Abdeckungen 26 angebracht, die die Nahtlinien 27 überdecken. Die Oberseite 31 der Zugstränge 13 und die Oberseite 32 der Bodenplatte 7 liegen in der gleichen Ebene, so dass die Förderleisten 14 die Bodenplatte 7 im Arbeitseinsatz gleitend überlaufen.

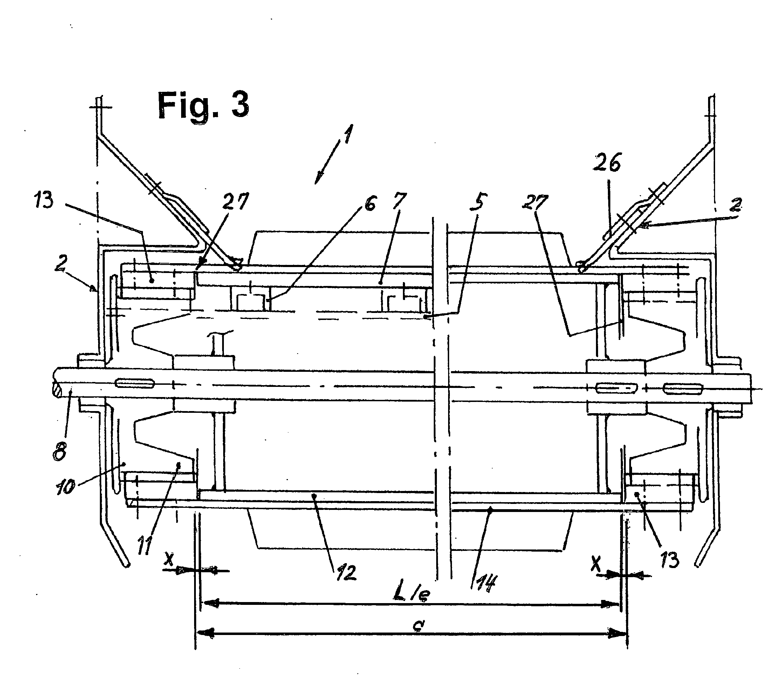

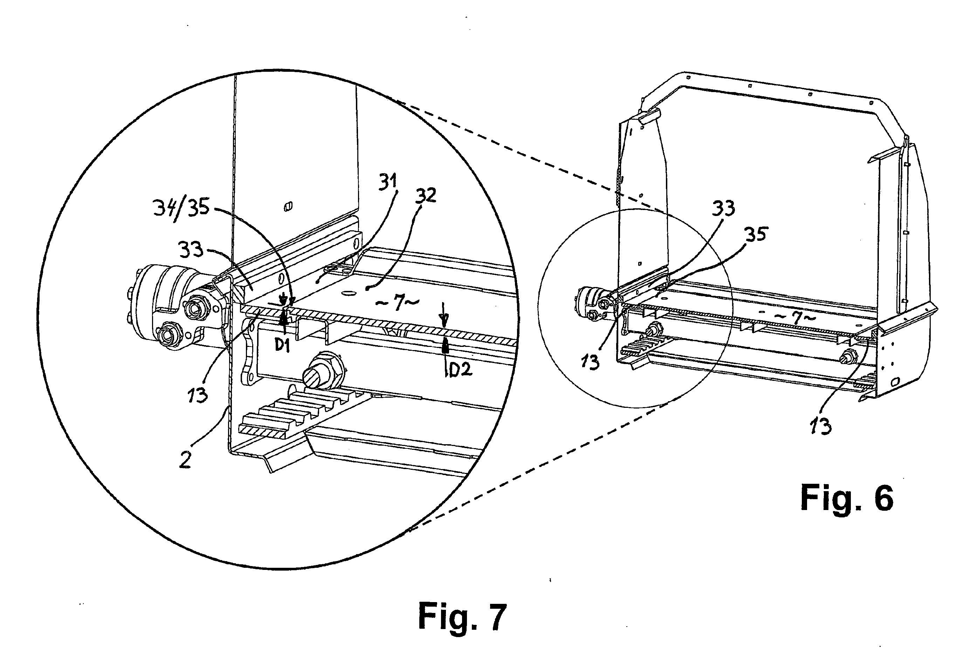

Anstelle der in Fig. 3 dargestellten Abdeckung 26, welche jeweils einen Zugstrang komplett überdecken, können auch Abdeckungen vorgesehen sein, die jeweils nur die Randbereiche der Zugstränge 13 abdecken. So ist bei einer in Fig. 6 dargestellten Ausführungsform eine Abdeckung 33 in Form einer Leiste am Rahmen 2 angebracht. Die Abdeckung 33 ist weitgehend spielfrei unmittelbar oberhalb des Zugstranges 13 angeordnet und schützt so den Bereich zwischen Zugstrang und Rahmen vor dem Eindringen von Fördergut-Partikeln oder sonstigen Verschmutzungen. Auf der anderen Seite des Zugstranges 13 fungiert der Außenbereich der Bodenplatte 7 selbst als Abdeckung 34 für den zur Bodenplatte 7 gerichteten Randbereich des Zugstrangs 13. Um die Höhendifferenz zwischen der Oberfläche 31 des Zugstrangs 13 und der Oberfläche 32 der Bodenplatte 7 zu minimieren ist der Abdeckungsbereich im Ausführungsbeispiel in Form von Stufen 35 ausgeführt, so dass die Bodenplatte im Abdeckungsbereich eine Dicke D1 aufweist, die kleiner ist als die Dicke D2 im Bereich der Bodenplatte 7 zwischen den Stufen 35.

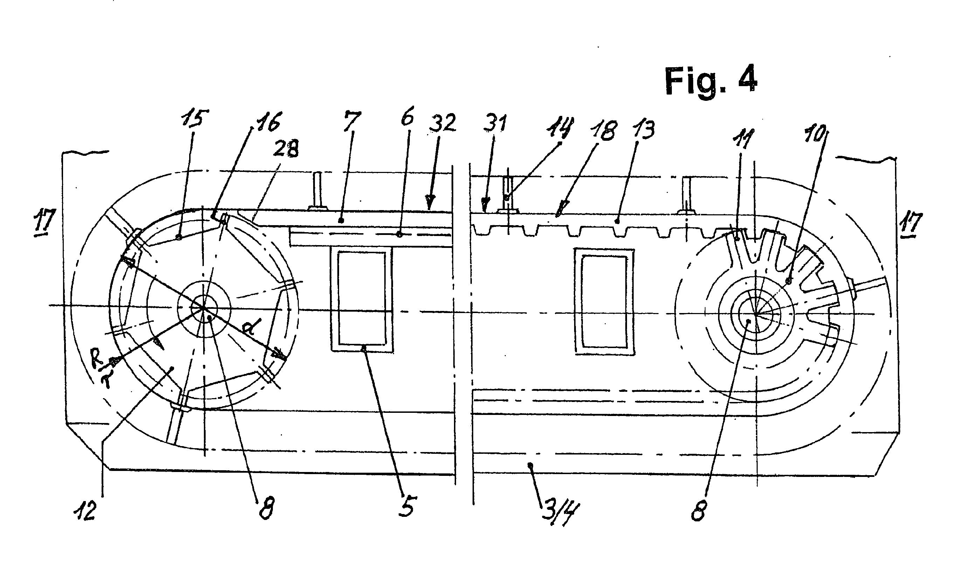

Die Bodenplatte 7 umfasst ferner eine Endseite 28 (vergl. Fig. 4). Die Endseite 28 ist an die Kontur der Förderwalze 12 bzw. deren Umlaufbahn bei Rotation, angepasst. Der Kratzboden 18 beschreibt eine längliche Umlaufbahn, die durch die Umlenkräder 10 definiert wird. Dabei bilden die Förderleisten 14 einen Umlenkradius R und die Zugstränge 13 einen Umlenkradius r aus. Die Radien R, r sind halb so groß, wie die bei Rotation der Förderwalze 12 beschriebene Umlaufbahn, die den Durchmesser d aufweist.

Die Breite des Förderbandes 1 ist an die Fahrzeugbreite eines Futtermischwagens angepasst und beträgt ca. 2 Meter. Der Kratzboden 18 kann über den Antrieb 19 in die beiden dargestellten Pfeilrichtungen P bewegt werden, so dass das auf die Bodenplatte 7 abgelegte Fördergut den Abwurfstellen 17 zugeführt werden kann. Dabei schieben die Förderleisten 14 das Fördergut vor sich her, bis die jeweilige Abwurfstelle 17 erreicht wird. Hierdurch entstehen im Bereich der Förderleisten 14 Widerstände, die in Abhängigkeit von Fördergut und Fördermenge die Bildung von haufenartigen Materialansammlungen bewirken.

Bei Erreichen der Abwurfstelle 17 erfasst die Förderwalze 12 das aufgeschobene Fördergut. Dabei entzerrt die Förderwalze die haufenartigen Strukturen, lockert das Fördergut auf und egalisiert den Materialfluss.

Da sowohl die Förderwalze 12 als auch die Umlenkräder 10 fest mit der Achswelle 8 verbunden sind, verhält sich die Umlaufgeschwindigkeit von Förderwalze 12 synchron zur Vorschubgeschwindigkeit des Kratzbodens 18. Eine Regulierung der Wurfweite ist über die Regulierung der Antriebsgeschwindigkeit in einem eng begrenztem Maß durch Veränderung des Ölflusses im Hydromotor 19 zwar grundsätzlich möglich, jedoch kann die Antriebsgeschwindigkeit von Förderwalze 12 und Kratzboden 18 nur gemeinsam verstellt werden.

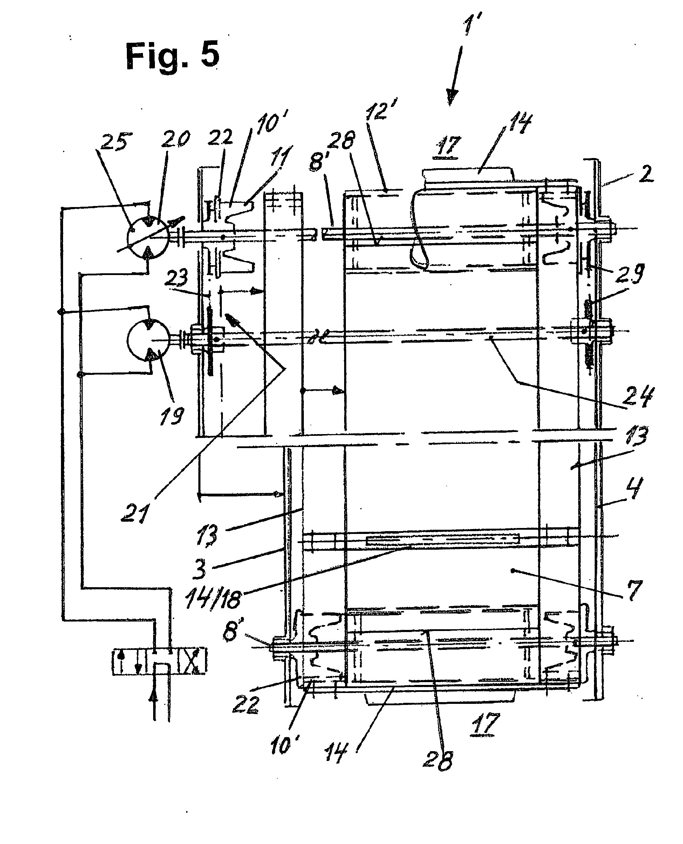

Fig. 5 zeigt eine zweite Ausführung 1' des erfindungsgemäßen Förderbandes, bei der die Antriebe der Förderwalze 12' und der Umlenkräder 10' voneinander entkoppelt sind.

Anstelle der im ersten Ausführungsbeispiel beschriebenen Achswelle 8 ist her eine Achswelle 8' vorgesehen. Die Achswelle 8' unterscheidet sich von der Achswelle 8 im Wesentlichen dadurch, dass auf ihr nur die Förderwalze 12 fest gelagert ist. Die Umlenkräder 10' sind dagegen frei drehbar auf der Achswelle 8' gelagert.

Der Antrieb des Kratzbodens 18 erfolgt über den ersten Antrieb 19, der jedoch in diesem Ausführungsbeispiel nicht die Achswelle 8' antreibt, sondern eine zusätzlich vorgesehene Antriebswelle 24. Als erster Antrieb 19 ist ein hydraulischer Konstantmotor vorgesehen. Damit die auf der Achswelle 8' drehbar gelagerten Umlenkräder 10' vom Antrieb 19 angetrieben werden können, sind sie über ein Vorgelege 21 an die Antriebswelle 24 gekoppelt. Die Umlenkräder 10 umfassen Bundscheiben 22 und ein daran angebrachtes Antriebselement. Im Ausführungsbeispiel ist als Antriebselement ein Kettenrad 29 vorgesehen.

Die mit den Umlenkrädern 10' verbundenen Kettenräder 29 sind mittels eines Vorgeleges 21, das an die zweite Antriebswelle 24 gekoppelt ist, antreibbar. Die Kettenräder 29 sind vom Vorgelege 21 über Zugmittel 23, hier Ketten, antreibbar. Das Vorgelege 21 ist in den Seitenwänden 3, 4 gelagert.

Die Achswelle 8' wird über einen zusätzlichen zweiten Antrieb 20 angetrieben. Der Antrieb 20 treibt die Förderwalze 12' an, ist jedoch nicht an die Umlenkräder 10 gekoppelt.

Bei dem im in Fig. 5 dargestellten Ausführungsbeispiel wird der Kratzboden 18 analog zu dem in den Fig. 1 bis 4 dargestellten Ausführungsbeispiel im Arbeitseinsatz mit etwa konstanter Vorschubgeschwindigkeit angetrieben.

Ein optimaler Einsatz des Förderbandes 1' wird durch eine variierbare Umlaufgeschwindigkeit der Förderwalze 12' erreicht. Hierbei treibt der als hydraulischer Verstellmotor ausgeführte zweite Antrieb 20 die Achswelle 8' und damit die Förderwalze 12' an. Die Regulierung der benötigten variablen Ölmenge erfolgt über die Steuerung verstellbarer Stromregelventile 25 der Hydraulikanlage.

Eine Förderwalze ist, im Gegensatz zu einem eine längliche Kontur umlaufenden Kratzboden, im Wesentlichen rotationssymmetrisch. Bei vergleichbarem technischem Aufwand kann eine Förderwalze deshalb mit wesentlich höheren Geschwindigkeiten betrieben werden als ein umlaufender Kratzboden. Hierdurch eröffnen sich für das Förderband 1' bzw. einen mit einem solchen Förderband 1' ausgestatteten Futtermischwagen zusätzliche Einsatzmöglichkeiten. Beispielsweise lassen sich bei mit hoher Geschwindigkeit rotierender Förderwalze 12' große Wurfweiten realisieren, so dass das Förderband 1' bzw. der Futtermischwagen auch zum weiträumigen Einstreuen von Stroh in Viehställen einsetzbar ist.

**Bezugszeichenliste:**

| | |
|---|---|
| 1, 1' | Förderband |
| 2 | Tragrahmen |
| 3 | Seitenwand |
| 4 | Seitenwand |
| 5 | Quertraverse |
| 6 | Auflagenschiene |
| 7 | Bodenplatte |
| 8, 8' | Achswelle |
| 9 | - |
| 10, 10' | Umlenkrad |
| 11 | Finger |
| 12, 12' | Förderwalze |
| 13 | Zugstrang |
| 14 | Förderleiste |
| 15 | Mantel |
| 16 | Förderelement |
| 17 | Abwurfstelle |
| 18 | Kratzboden |
| 19 | Hydromotor (Konstantmotor) |
| 20 | Hydromotor (Verstellmotor) |
| 21 | Vorgelege |
| 22 | Bundscheibe |
| 23 | Zugmittel/Zugmittelantrieb |
| 24 | Antriebswelle |
| 25 | Stromregelventil |
| 26 | Abdeckung |
| 27 | Nahtlinie |
| 28 | Endseite |
| 29 | Kettenrad |
| 30 | - |
| 31 | Oberseite (der Zugstränge 13) |
| 32 | Oberseite (der Bodenplatte 7) |
| 33 | Abdeckung (zum Rahen 2 hin) |
| 34 | Abdeckung (zur Bodenplatte 7 hin) |
| 35 | Stufe |
| | |
| A - A | Schnitt |
| B - B | Schnitt |
| D1 | Dicke |
| D2 | Dicke |
| c | Abstandsmaß (der Zugstränge 13) |
| d | Durchmesser (der Förderwalze 12, 12') |
| e | Breite (der Bodenplatte 7) |
| R | Umlenkradius (der Förderleisten 14) |
| r | Umlenkradius (der Zugstränge 13) |
| x | Abstand |
| L | Breite (der Förderwalze 12, 12') |
| P | Pfeilrichtung |

## Patentansprüche

1. Förderband (1; 1') zum Verteilen von Viehfutter, Stroh oder ähnlichem Material, umfassend:
- einen Tragrahmen (2), der mit einer Bodenplatte (7) ausgestattet ist;
- zwei im Tragrahmen (2) gelagerten Achswellen (8; 8'), wobei auf jeder Achswelle (8; 8') wenigstens zwei Umlenkräder (10; 10') gelagert sind und wobei durch den Bereich zwischen den Umlenkrädern (10; 10') wenigstens eine Abwurfstelle (17) für das zu verteilende Viehfutter, Stroh oder ähnlichem Material definiert wird;
- einen endlosen Kratzboden (18), umfassend wenigstens zwei die Umlenkräder (10, 10') in einem Abstand (c) umlaufende Zugstränge (13) und diese verbindenden Förderleisten (14);
- einen mit dem endlosen Kratzboden (18) verbundenen ersten Antrieb (19);
- wobei die Förderleisten (14) auf der Bodenplatte (7) gleitend aufliegen, so dass auf das Förderband (1/1') aufgebrachtes Fördergut zu einer Abwurfstelle (17) transportierbar ist,
**dadurch gekennzeichnet, dass** an mindestens einer Abwurfstelle (17), auf der Achswelle (8; 8') eine Förderwalze (12;12') zwischen den Umlenkrädern (10; 10') angeordnet ist.

2. Förderband nach Anspruch 1, **dadurch gekennzeichnet, dass** die Förderwalze (12; 12') eine Breite (L) aufweist, die dem Abstand (C) zwischen den Zugsträngen (13) zuzüglich beidseitig zwischen Förderwalze (12; 12') und Zugsträngen (13) vorgesehener Abstände (x) zur Verringerung der Reibung entspricht.

3. Förderband nach Anspruch 1 oder 2, **dadurch gekennzeichnet, dass** die Förderwalze (12; 12') einen äußeren Durchmesser (d) aufweist, der doppelt so groß ist, wie der innere Umlenkradius (R) der umlaufenden Förderleisten (14), und/oder der äußere Umlenkradius (r) der Zugstränge (13).

4. Förderband nach Anspruch 1, **dadurch gekennzeichnet, dass** die Bodenplatte (7) eine Breite (e) aufweist, die dem Abstandsmaß (c) zwischen den Zugsträngen (13) plus eines beidseitig zwischen Zugstrang (13) und Bodenplatte (7) bzw. Förderwalze (12; 12') vorgesehen Abstandes (x) zur Verringerung der Reibung, entspricht.

5. Förderband nach einem der Ansprüche 1 bis 4, **dadurch gekennzeichnet, dass** am Rahmen (2) angebrachte Abdeckungen (26) vorgesehen sind, die die durch den Übergangsbereich von Bodenplatte (7) zu den Zugsträngen (13) und/oder den Übergangsbereich von der Förderwalze (12, 12') zu den Zugsträngen (13) ausgebildeten Nahtlinien (27) übergreifen.

6. Förderband nach einem der Ansprüche 1 bis 5, **dadurch gekennzeichnet, dass** die Oberseite (31) der Zugstränge (13) und die Oberseite (32) der Bodenplatte (7) auf einer Höhe liegen, bzw. eine Ebene bilden.

7. Förderband nach einem der Ansprüche 1 bis 6, **dadurch gekennzeichnet, dass** die Bodenplatte (7) wenigstens eine Endseite (28) aufweist, die über die Förderwalze (12/12') ragt.

8. Förderband nach einem der vorhergehenden Ansprüche, **dadurch gekennzeichnet, dass** die an den ersten Antrieb (19) gekoppelte Achswelle (8) mit den Umlenkrädern (10) sowie der Förderwalze (12) fest verbunden ist, so dass mittels des Antrieb (19) sowohl den Kratzboden (18) als auch die Förderwalze (12) antreibbar ist.

9. Förderband nach Anspruch 8, **dadurch gekennzeichnet, dass** Umfangsgeschwindigkeit der Förderwalze (12) und Umlaufgeschwindigkeit des Kratzbodens (18) gleich sind.

10. Förderband nach einem der Ansprüche 1 bis 7, **dadurch gekennzeichnet, dass** für die Förderwalze (12') ein zweiter Antrieb (20) vorgesehen ist, so dass Kratzboden (18) und Förderwalze (12') unabhängig voneinander antreibbar sind.

11. Förderband nach Anspruch 10, **dadurch gekennzeichnet, dass** die Umlenkräder (10') auf der Achswelle (8') frei drehbar-angeordnet sind und ein zusätzliches Antriebselement zum Antrieb der Umlenkräder (10') umfassen.

12. Förderband nach einem der Ansprüche 10 bis 11, **dadurch gekennzeichnet, dass** ein Vorgelege (21) vorgesehen ist, mittels dessen die Umlenkräder (10') über Zugmittelantriebe (23) antreibbar sind.

13. Förderband nach einem der Ansprüche 10 bis 12, **dadurch gekennzeichnet, dass** die Umfangsgeschwindigkeit der Förderwalze (12') und/oder der Umlaufgeschwindigkeit des Kratzbodens (18) stufenlos einstellbar sind.

14. Förderband nach einem der Ansprüche 10 bis 13, **dadurch gekennzeichnet, dass** der Antrieb von Förderwalze (12') und Kratzboden (18) über eine Parallelanordnung der Antriebe (19; 20) erfolgt.

15. Förderband nach einem der vorhergehenden Ansprüche, **dadurch gekennzeichnet, dass** der Mantel (15) der Förderwalze (12; 12') polygonartig ausgeführt ist.

16. Förderband nach einem der vorhergehenden Ansprüche, **dadurch gekennzeichnet, dass** die Förderwalze (12; 12') mit Förderelementen (16) besetzt ist.

17. Förderband nach einem der vorhergehenden Ansprüche, **dadurch gekennzeichnet, dass** eine Abdeckung (34) für wenigstens einen Zugstrang (13) an seiner der Bodenplatte (7) zugewandten Seite ausgebildet wird, indem die Bodenplatte (7) den Zugstrang (13) in dessen Randbereich überragt.

18. Förderband nach Anspruch 17, **dadurch gekennzeichnet, dass** der den Zugstrang (13) überragende Bereich der Bodenplatte (7) in Form einer Stufe (35) ausgeführt ist, wobei die Stufe eine Dicke (D1) aufweist, die kleiner ist als die Dicke (D2) der Bodenplatte Bereich zwischen den Stufen (35).

19. Förderband nach einem der vorhergehenden Ansprüche, **dadurch gekennzeichnet, dass** wenigstens ein Zugstrang (13) an seiner der Bodenplatte (26) abgewandten Seite von einem an einer am Tragrahmen (2) angebrachten Abdeckung (33) überdeckt wird.

20. Futtermischwagen zur Ausbringung von Viehfutter ausgerüstet mit einem Förderband nach einem der Ansprüche 1 bis 19.
